# EUROPEAN PATENT APPLICATION

(11) **EP 4 640 333 A1**
(43) Date of publication of application: **29.10.2025**
(21) Application number: 23906995.8
(22) Date of filing: 18.12.2023
(51) Int. Cl.: B21D 24/00, B21D 26/033, B30B 15/00, G05B 19/18, G05B 19/4063

(54) **DISPLAY DEVICE AND MOLDING SYSTEM EQUIPPED WITH DISPLAY DEVICE**

(30) Priority: 22.12.2022 JP 2022205280
(71) Applicant: Sumitomo Heavy Industries, Ltd., Tokyo 141-6025 (JP)
(72) Inventor: KOUYAMA, Eiji, Niihama-shi, Ehime 792-8588 (JP)
(74) Representative: Louis Pöhlau Lohrentz
(86) International application number: PCT/JP2023/045361
(87) International publication number: WO 2024/135635

(57) **Abstract**

There is provided a display device that can achieve energy saving in a forming system. A display device 105 is a display device of a forming system 100 that heats a metal pipe material 5 to form the metal pipe material 5. With regard to this, the display device 105 visualizes energy consumption associated with the hot forming of the metal pipe material 5. For this reason, a worker can visually check the energy consumption. Accordingly, the worker can modify a device, which is in use, or improve a method of using the device to achieve energy saving. As described above, energy saving can be achieved in the forming system 100.

## Description

### Technical Field

The present invention relates to a display device.

### Background Art

In the related art, a forming system disclosed in PTL 1 is known as a forming system that forms a metal material. The forming system heats a metal material and brings the heated metal material into contact with a forming die to perform forming.

### Citation List

### Patent Literature

[PTL 1] Japanese Unexamined Patent Publication No. 2009-220141

### Summary of Invention

### Technical Problem

Here, energy saving of the equipment is required due to a recent global warming problem. Not only simple pressing but also a forming process, which involve heating a metal material and supplying fluid to the heated metal material is performed in the forming apparatus disclosed in the related art. For this reason, energy saving is required due to an increase in energy consumption in a forming system involving heating or a forming system involving supplying fluid. In addition, as a prerequisite, it is important even for an equipment owner who introduces equipment to identify to what extent energy is consumed by the equipment in the flow of SDGs.

The present invention has been made to solve such a problem, and an object of the present invention is to provide a display device that can achieve energy saving in a forming system.

### Solution to Problem

A display device according to an aspect of the present invention is a display device of a forming system that performs at least one of heating and expansion of a metal material and moves a die to form the metal material, and displays at least energy consumption associated with the forming of the metal material for each part.

The display device is a display device of a forming system that performs at least one of heating and expansion of a metal material and moves a die to form the metal material. With regard to this, the display device displays at least energy consumption associated with the forming of the metal material for each part. For this reason, a worker can visually check the energy consumption. Accordingly, the worker can modify a device, which is in use, or improve a method of using the device to achieve energy saving. As described above, energy saving can be achieved in the forming system.

The forming system may include a plurality of devices that consume energy, and the display device may display the energy consumption of each device in a state where the plurality of devices are classified. In this case, a worker can easily visually recognize the energy consumption of each of the devices classified into a predetermined category.

For example, the plurality of devices may include at least an electric heating device, a high-pressure gas generation device, a bending device, and a cutting device.

The forming system may include a plurality of devices that consume energy, the devices may include components of the devices, and the display device may be capable of adjusting and displaying hierarchical levels of the components of the devices. In this case, a worker can visually recognize the status of energy consumption in the forming system according to the hierarchical level that the worker desires to check.

The forming system may include a plurality of devices that consume energy, and the display device may be capable of displaying cumulative energy consumption of each device. In this case, it is possible to determine the current statuses of the devices by visually checking past actual results of energy consumption.

The display device may display the energy consumption associated with the forming of each part of the metal material. In this case, a worker can directly check the energy consumption associated with the forming of each part.

The display device may display cumulative energy consumption associated with the forming of the part of the metal material. In this case, a worker can check the past actual results of energy consumption.

The display device may display energy consumption during the forming of the part of the metal material at a predetermined time interval. In this case, a worker can check energy consumption associated with the forming of the metal material for each part through the check of energy consumption at a predetermined time interval.

The display device may display cumulative energy consumption associated with the forming of the part of the metal material at a predetermined time interval. In this case, a worker can check the past actual results of energy consumption associated with the forming of the metal material for each part through the check of cumulative energy consumption at a predetermined time interval.

The forming system is a forming system including the display device described above.

The forming system has the same actions and effects as the display device.

### Advantageous Effects of Invention

According to the present invention, it is possible to provide a display device that can achieve energy saving in a forming system.

### Brief Description of Drawings

Fig. 1 is a schematic configuration diagram showing a configuration of a forming system according to the present embodiment.
Fig. 2 is a schematic diagram showing a configuration of the forming apparatus.
Fig. 3 is a diagram showing an example of an image displayed on a display device.
Figs. 4A and 4B are diagrams showing examples of an image displayed on the display device.
Figs. 5A and 5B are diagrams showing examples of an image displayed on the display device.
Fig. 6 is a diagram showing an example of an image displayed on the display device.
Fig. 7 is a diagram showing an example of an image displayed on the display device.
Fig. 8 is a diagram showing an example of an image displayed on a display device.
Fig. 9 is a diagram showing an example of an image displayed on the display device.

### Description of Embodiments

Hereinafter, a preferred embodiment of the present invention will be described with reference to the drawings. The same portions or equivalent portions will be denoted in the drawings by the same reference numerals, and repeated description thereof will be omitted.

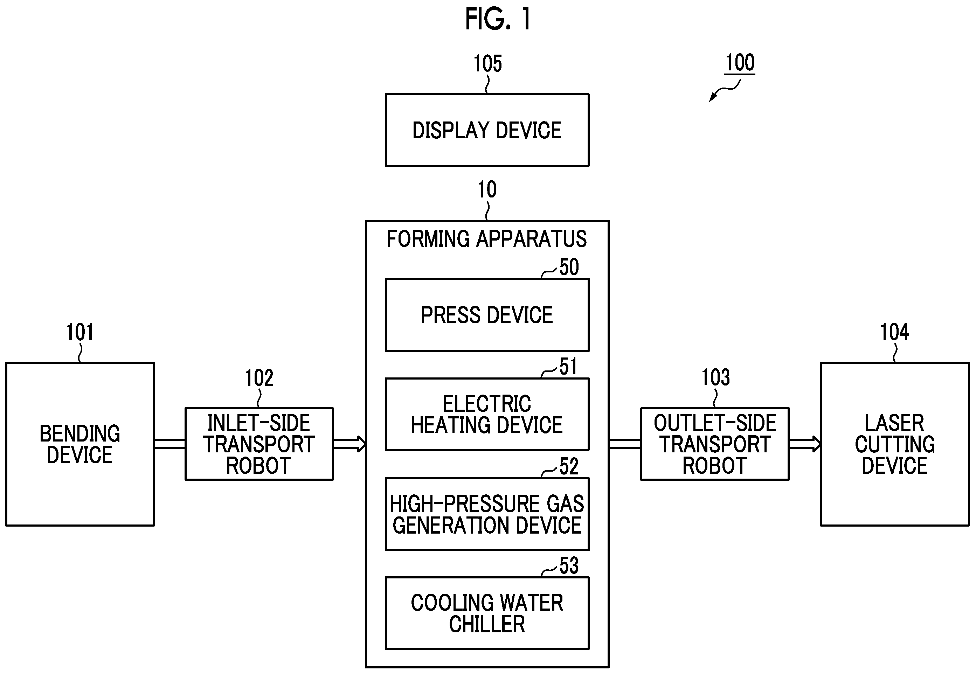

Fig. 1 is a schematic configuration diagram showing a configuration of a forming system 100 according to the present embodiment. The forming system 100 is a system that forms a metal material. As shown in Fig. 1, the forming system 100 includes a forming apparatus 10, a bending device 101, an inlet-side transport robot 102, an outlet-side transport robot 103, a laser cutting device 104 (cutting device), and a display device 105. In the present embodiment, a metal pipe material 5 is used as the metal material.

The forming apparatus 10 is a device that processes the heated metal pipe material 5. In the present embodiment, the forming apparatus 10 presses and forms the heated metal pipe material 5. In the present embodiment, a forming apparatus that supplies fluid to the heated metal pipe material 5 and brings the metal pipe material 5 into contact with a forming surface of a forming die to form and quench a metal pipe having a hollow shape is adopted as the forming apparatus 10. The forming apparatus 10 includes a press device 50, an electric heating device 51, a high-pressure gas generation device 52, and a cooling water chiller 53.

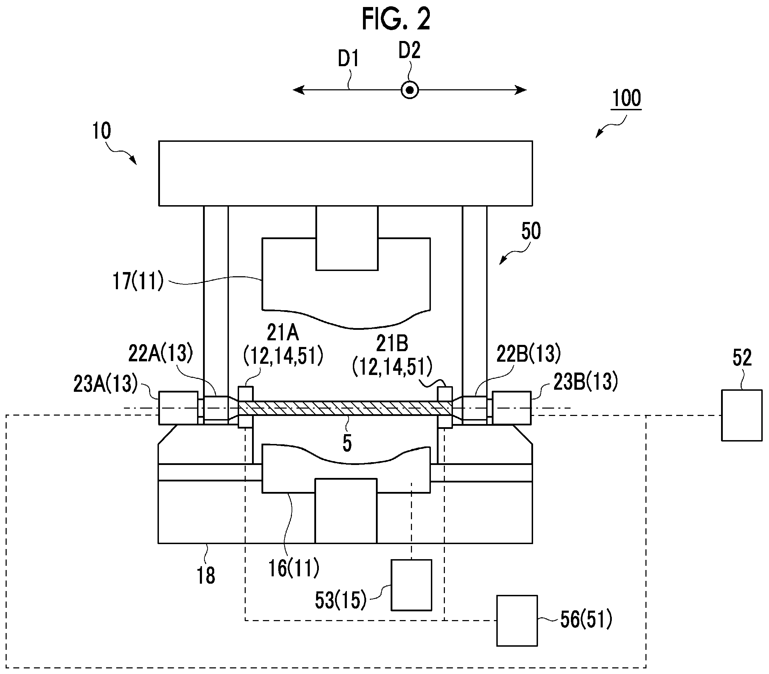

Fig. 2 is a schematic diagram showing a configuration of the forming apparatus 10. As shown in Fig. 2, in the present embodiment, the forming apparatus 10 is installed on a horizontal surface. The forming apparatus 10 includes a forming die 11, a holding unit 12, a fluid supply unit 13, a heating unit 14, and a cooling unit 15. In the present specification, the metal pipe material 5 refers to a hollow article of which forming to be performed by the forming apparatus 10 is not yet completed. The metal pipe material 5 is a pipe material made of a type of steel that can be quenched. A direction in which a reference axis of the metal pipe material 5 extends in a case where the metal pipe material 5 is installed in the forming apparatus 10 may be referred to as an "axial direction D1". Further, among horizontal directions, a direction perpendicular to the axial direction D1 may be referred to as a "width direction D2".

The forming die 11 is a die that forms a metal pipe from the metal pipe material 5, and includes a lower die 16 and an upper die 17 that face each other in a vertical direction. The lower die 16 and the upper die 17 are formed of blocks made of steel. Each of the lower die 16 and the upper die 17 is provided with a recessed portion in which the metal pipe material 5 is accommodated. In a state where the lower die 16 and the upper die 17 are in close contact with each other (die closed state), the respective recessed portions form a space having a target shape into which the metal pipe material 5 is to be formed. Therefore, the surface of each of the recessed portions is a forming surface of the forming die 11. The lower die 16 is fixed to a base stage 18 via a die holder or the like. The upper die 17 is fixed to a slide of a drive mechanism via a die holder or the like. The drive mechanism is a mechanism that moves at least one of the lower die 16 and the upper die 17. The press device 50 includes the forming die 11, a drive mechanism for the forming die 11, the surrounding base stage 18 or a frame, and the like.

The holding unit 12 is a mechanism that holds the metal pipe material 5 disposed between the lower die 16 and the upper die 17. The holding unit 12 includes a holding member 21A that is provided on one end side of the forming die 11 in the axial direction D1 to hold the metal pipe material 5, and a holding member 21B that is provided on the other end side of the forming die 11 in the axial direction D1 to hold the metal pipe material 5. Each of the holding members 21A and 21B provided on both sides in the axial direction D1 is divided into an upper member and a lower member, and clamps an end portion of the metal pipe material 5 therebetween in the vertical direction to hold the metal pipe material 5. Each of the holding members 21A and 21B is provided with a drive mechanism (not shown), and is movable in the vertical direction. The holding member may not be divided into an upper member and a lower member, and may be divided into, for example, a left member and a right member.

The fluid supply units 13 are mechanisms that supply high-pressure fluid into the metal pipe material 5 held between the lower die 16 and the upper die 17. The fluid supply units 13 supply high-pressure fluid to the metal pipe material 5, which is in a high-temperature state, to expand the metal pipe material 5. The fluid supply units 13 are provided on both end sides of the forming die 11 in the axial direction D1. The fluid supply units 13 include nozzles 22A and 22B that supply the fluid from opening portions of the end portions of the metal pipe material 5 into the metal pipe material 5, and drive mechanisms 23A and 23B that cause the nozzles 22A and 22B to advance to and retreat from the opening portions of the metal pipe material 5, respectively. The fluid supply units 13 may supply gas, such as high-pressure air or inert gas, as the fluid. The fluid supply units 13 include a high-pressure gas generation device 52 for supplying high-pressure fluid to the nozzles 22A and 22B. The high-pressure gas generation device 52 supplies high-pressure fluid to the nozzles 22A and 22B. Further, the fluid supply unit 13 and the holding unit 12 including the mechanisms that move the metal pipe material 5 in the vertical direction may be the same unit.

The heating unit 14 is a unit that heats the metal pipe material 5. The heating unit 14 energizes the metal pipe material 5 to heat the metal pipe material 5. The heating unit 14 includes the holding members 21A and 21B as electrodes. The heating unit 14 causes current to flow through the metal pipe material 5 from a power supply 56 via the holding members 21A and 21B, which are electrodes, in a state where the metal pipe material 5 is held by the holding members 21A and 21B, which are electrodes. The heating unit 14 constitutes the electric heating device 51.

The cooling unit 15 is a mechanism that cools the forming die 11. The cooling unit 15 includes the cooling water chiller 53 that supplies cooling water to the dies 16 and 17. The cooling unit 15 includes flow channels formed in the dies 16 and 17. The cooling unit 15 causes cooling water to flow through the flow channels to cool the dies 16 and 17.

As shown in Fig. 1, the bending device 101 is a device that bends the metal pipe material 5 in a stage before processing to be performed by the forming apparatus 10. For example, in a case where the forming apparatus 10 includes the forming die 11 for pressing a bent metal pipe material 5, the bending device 101 bends a metal pipe material 5 not yet installed in the forming apparatus 10. The inlet-side transport robot 102 is a device that transports the metal pipe material 5 bent by the bending device 101 from the bending device 101 to the forming apparatus 10. The outlet-side transport robot 103 is a device that transports the formed metal pipe from the forming apparatus 10 to the laser cutting device 104. The laser cutting device 104 is a device that cuts a desired portion of the formed metal pipe with a laser.

The display device 105 is a device that displays various types of information in an image. The display device 105 displays at least energy consumption associated with the forming of the metal pipe material 5 for each part in the forming system that performs at least one of the heating and expansion of the metal pipe material 5 and moves the die to form the metal pipe material **5.** Among a plurality of metal pipe materials 5 formed by the forming system 100, a single metal pipe material 5 corresponds to a metal pipe material 5 related to one part. In addition, displaying energy consumption associated with the forming of the metal pipe material 5 for each part includes not only directly displaying energy consumption associated with the forming of the metal pipe material 5 related to one part but also indirectly displaying energy consumption associated with the forming of the metal pipe material 5 for each part in a data-processed manner. The display device 105 can visualize energy consumption associated with the hot forming of the metal pipe material 5. The display device 105 can visualize the energy consumption of at least a device used to perform hot forming in the forming system 100. Further, the display device 105 can visualize energy consumption associated with forming the metal pipe material 5 with fluid. The display device 105 can visualize the energy consumption of at least a device used to perform forming with fluid in the forming system 100. It goes without saying that the "each part" includes one part, a plurality of parts, one lot (the number of lots is arbitrarily determined), and the like.

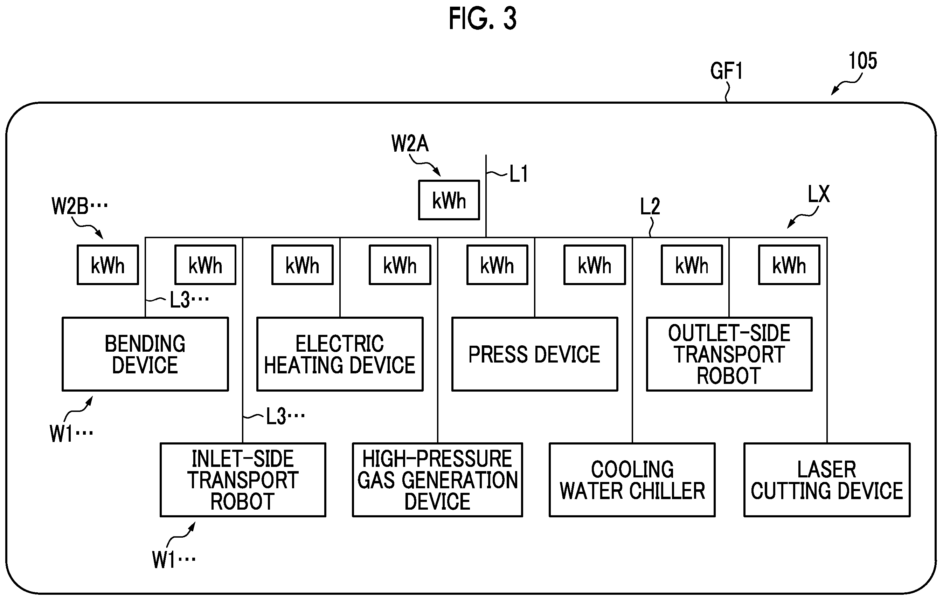

Specifically, the display device 105 displays an image GF1 shown in Fig. 3. The image GF1 displays a schematic power supply line LX for each device of the forming system 100 and windows W1, W2A, and W2B.

The power supply line LX includes a supply source line L1, a main line L2, and branch lines L3. The supply source line L1 is a line that extends from a power supply source for the forming system 100. The main line L2 is a line that is used to distribute power supplied from the supply source line L1 to each of the branch lines L3. The branch lines L3 are lines that branch from the main line L2 to the respective devices.

The windows W1 are windows that display the contents of the respective devices of the forming system 100. The windows W1 are displayed to be connected to the branch lines L3 extending from the main line L2. In the present embodiment, on the respective windows W1, device names, such as "bending device", "inlet-side transport robot", "outlet-side transport robot", and "laser cutting device", are displayed and device names, such as "press device", "electric heating device", "high-pressure gas generation device", and "cooling water chiller" of the forming apparatus 10, are shown.

The windows W2A and W2B are windows in which the consumption of energy consumed through the respective lines is displayed. In the present embodiment, energy consumption is displayed in "kWh" which is power consumption. The window W2A is disposed next to the supply source line L1. The window W2A displays the consumption of energy consumed in the entire forming system 100. The window W2B is disposed next to each of the branch lines L3. The window W2B displays the consumption of energy consumed in each device. The windows W2A and W2B may display the values of the measuring instruments provided at the corresponding positions in the forming system 100, or may display calculation values calculated based on the values of other measuring instruments. The windows W2A and W2B may display values that change in real time, or may display calculated values such as average values for a predetermined period.

In a case where the display device 105 visualizes energy consumption associated with the hot forming of the metal pipe material 5, the display device 105 only needs to be capable of displaying at least the energy consumption of "electric heating device" and may omit the display of the energy consumption of the other devices. In a case where the display device 105 visualizes energy consumption associated with forming the metal pipe material 5 with fluid, the display device 105 only needs to be capable of displaying at least the energy consumption of "high-pressure gas generation device" and may omit the display of the energy consumption of the other devices. The reason for this is that a heating process and a gas supply process in the forming apparatus 10 are likely to consume energy and the forming apparatus 10 corresponds to an apparatus of which deterioration, abnormality, or the like is required to be detected unlike other forming apparatuses.

In addition, the display device 105 can separately display the energy consumption of the plurality of devices of the forming system 100 in a state where the plurality of devices are classified. For example, the display device 105 may separately display the energy consumption of each of the plurality of devices in a state where the plurality of devices are classified by voltage. Alternatively, the display device 105 may separately display the energy consumption of each of the plurality of devices in a state where the plurality of devices are classified by type.

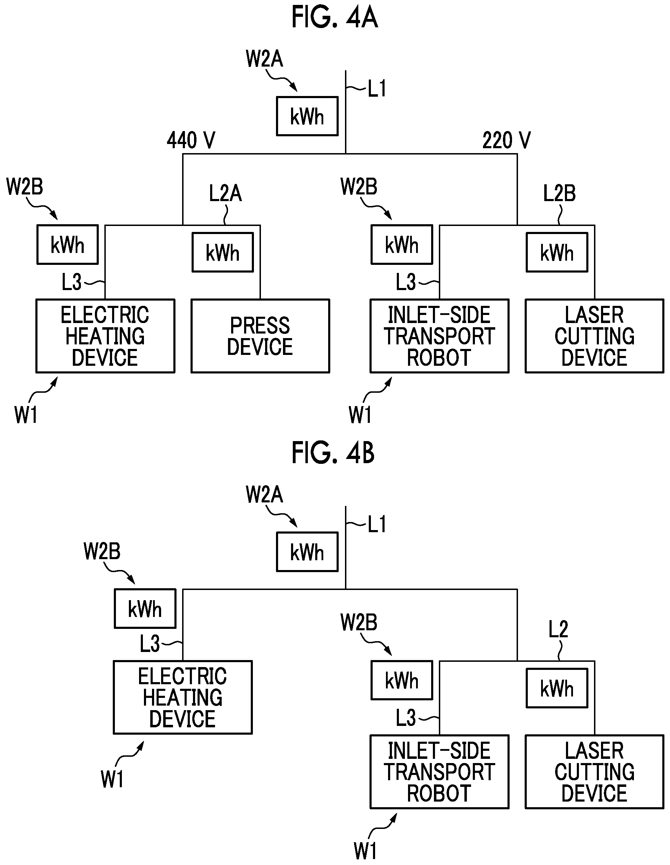

As shown in Fig. 4A, the supply source line L1 branches into a main line L2A of 440V and a main line L2B of 220V. The windows W1 of the devices that operate at a voltage of 440V and the windows W2B are displayed on a side corresponding to the main line L2A of 440V. The windows W1 of the devices that operate at a voltage of 220V and the windows W2B are displayed on a side corresponding to the main line L2B of 220V. Accordingly, the energy consumption of the devices that operate at a voltage of 440V and the energy consumption of the devices that operate at a voltage of 220V can be displayed separately. Further, as shown in Fig. 4B, the electric heating device may be displayed to branch from the supply source line L1 in a branching manner different from that of the other devices. In this case, the electric heating device and the other devices can be displayed separately. In this way, energy consumption can be displayed according to the preference of an equipment owner or a worker.

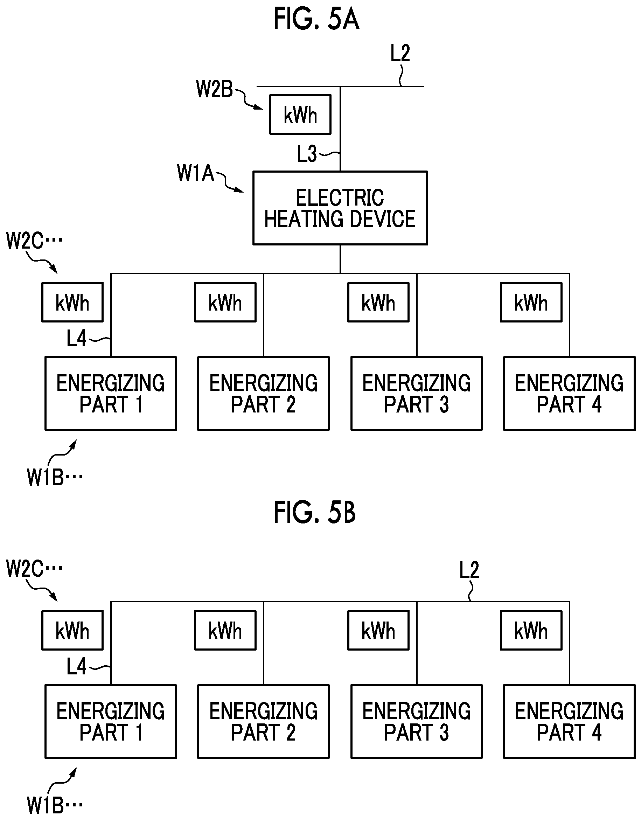

In addition, the forming system 100 includes a plurality of devices that consume energy, and each device includes components of the device. The display device 105 can adjust and display the hierarchical levels of the components of the devices. For example, the electric heating device 51 includes four energizing parts, that is, an upper holding member 21A, a lower holding member 21A, an upper holding member 21B, and a lower holding member 21B, as components. Therefore, the display device 105 may display the energy consumption of the entire electric heating device 51 at a hierarchical level indicating the entire electric heating device 51 as shown in Fig. 3, or may display the energy consumption of the individual energizing parts at a hierarchical level indicating the individual energizing parts as shown in Figs. 5A and 5B.

Specifically, as shown in Fig. 5A, the display device 105 may display a window W1A of "electric heating device" and the window W2B of energy consumption at the hierarchical level of the branch line L3 that branches from the main line L2, and may display windows W1B of "energizing parts 1 to 4" and windows W2C of energy consumption at the hierarchical level of branch lines L4 that further branch from the branch line L3. Alternatively, as shown in Fig. 5B, the display device 105 may omit the display of "electric heating device", and may display windows W1B of "energizing parts 1 to 4" and windows W2C of energy consumption at the hierarchical level of direct branch lines L4 that branch from the main line L2. Since energy consumption is displayed in a state where a lower level is made deep as described above, it is also possible to identify, for example, abnormality or the like in the energizing parts at an early stage.

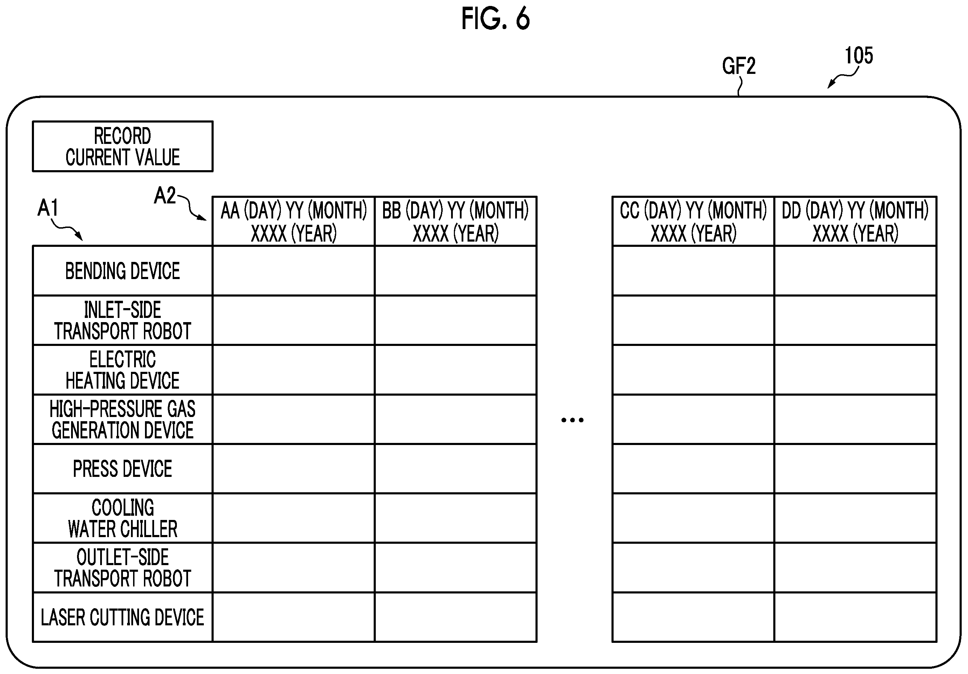

Further, the display device 105 can display the cumulative energy consumption of each device. As shown in Fig. 6, the display device 105 displays an image GF2 in which the cumulative energy consumption of each device is displayed in a time series. The names of the respective devices of the forming system 100 are listed in a column A1 at the left end of a table in the image GF2. Date and time when recording is performed are listed in a row A2 at an upper end of the table in the image GF2. In a case where a button of "record current value" is clicked, the display device 105 records and displays the current date and time and the cumulative power values of the respective devices in a column at the left end. A column at the left end of the table shows the latest data, and a column closer to the right shows older date and time. The recording can be performed up to a predetermined number (for example, 10) and the oldest data is deleted first in a case where the number of times of recording exceeds the predetermined number.

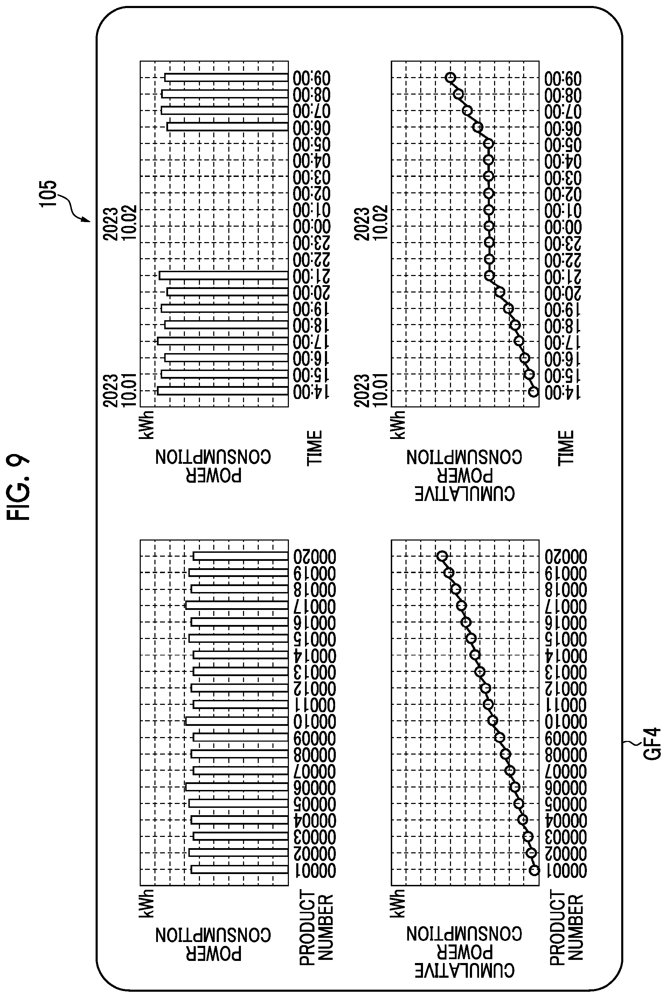

The display device 105 may display, for example, information shown in Fig. 9. Each part of the metal pipe material 5 is identified as "product number" on the left side on a screen shown in Fig. 9. As shown in a graph on the upper left side in Fig. 9, the display device 105 displays energy consumption associated with the forming of each part. A horizontal axis of the graph represents a product number (identification of a part) of the metal pipe material 5, and a vertical axis thereof represents power consumption (energy consumption) associated with the forming of the corresponding product number. As shown in a graph on the lower left side in Fig. 9, the display device 105 displays cumulative energy consumption associated with the forming of a part. A horizontal axis of the graph represents a product number (identification of a part) of the metal pipe material 5, and a vertical axis thereof represents power consumption (energy consumption) associated with the forming of the corresponding product number and a cumulative value of power consumption (energy consumption) associated with forming up to that time.

As shown in a graph on the upper right side in Fig. 9, the display device 105 displays energy consumption during the forming of a part at a predetermined time interval. Here, the graph is shown at a time interval of 1 hour. A horizontal axis of the graph represents time, and a vertical axis thereof represents power consumption (energy consumption) during the time interval from each time. In a case where the metal pipe materials 5 related to a plurality of parts are formed during the time interval, total power consumption associated with the forming of a corresponding number of metal pipe materials 5 is shown. As shown in a graph on the lower right side in Fig. 9, the display device 105 displays cumulative energy consumption associated with the forming of a part at a predetermined time interval. Here, the graph is shown at a time interval of 1 hour. A horizontal axis of the graph represents time, and a vertical axis thereof represents power consumption (energy consumption) during the time interval from each time and a cumulative value of power consumption (energy consumption) associated with forming up to that time.

The display device 105 may display product numbers in a range selected by a worker and energy consumption (cumulative energy consumption) at the time. For example, product numbers "1 to 20" are shown on the right side in Fig. 9, but a part of the range may be selected and the energy consumption of selected product numbers may be displayed.

Next, the actions and effects of the display device 105 according to the present embodiment will be described.

The display device 105 is a display device 105 of a forming system 100 that performs at least one of heating and expansion of a metal pipe material 5 (metal material) and moves a die to form the metal pipe material **5.** With regard to this, the display device 105 displays at least energy consumption associated with the forming of the metal pipe material 5 for each part. For this reason, a worker can visually check the energy consumption. Accordingly, the worker can modify a device, which is in use, or improve a method of using the device to achieve energy saving. As described above, energy saving can be achieved in the forming system.

The display device according to the present embodiment is a display device 105 of a forming system 100 that heats a metal pipe material 5 (metal material) to form the metal pipe material 5, and the display device visualizes energy consumption associated with the hot forming of the metal pipe material 5.

The display device 105 is a display device of a forming system 100 that heats a metal pipe material 5 to form the metal pipe material 5. With regard to this, the display device 105 visualizes energy consumption associated with the hot forming of the metal pipe material 5. For this reason, a worker can visually check the energy consumption. Accordingly, the worker can identify the actual energy consumption of the equipment. Further, it is possible to modify a device, which is in use, or to improve a method of using the device to achieve energy saving. As described above, energy saving can be achieved in the forming system 100.

The display device 105 according to the present embodiment is a display device of a forming system 100 that supplies fluid to a metal pipe material 5 to form the metal pipe material 5, and visualizes energy consumption associated with forming the metal pipe material 5 with the fluid.

The display device 105 is a display device of a forming system 100 that supplies fluid to a metal pipe material 5 to form the metal pipe material 5. With regard to this, the display device 105 visualizes energy consumption associated with forming the metal pipe material 5 with the fluid. For this reason, a worker can visually check the energy consumption. Accordingly, the worker can identify the actual energy consumption of the equipment. Further, it is possible to modify a device, which is in use, or to improve a method of using the device to achieve energy saving. As described above, energy saving can be achieved in the forming system 100.

The forming system 100 may include a plurality of devices that consume energy, and the display device 105 may display the energy consumption of each device in a state where the plurality of devices are classified. In this case, a worker can easily visually recognize the energy consumption of each of the devices classified into a predetermined category.

For example, the plurality of devices may include at least an electric heating device, a high-pressure gas generation device, a bending device, and a cutting device.

The forming system 100 may include a plurality of devices that consume energy, the devices may include components of the devices, and the display device 105 may be capable of adjusting and displaying hierarchical levels of the components of the devices. In this case, a worker can visually recognize the status of energy consumption in the forming system 100 according to the hierarchical level that the worker desires to check.

The forming system 100 may include a plurality of devices that consume energy, and the display device 105 may be capable of displaying cumulative energy consumption of each device. In this case, it is possible to determine the current statuses of the devices by visually checking past actual results of energy consumption.

The display device 105 may display energy consumption associated with the forming of each part of the metal pipe material 5. In this case, a worker can directly check the energy consumption associated with the forming of each part.

The display device 105 may display cumulative energy consumption associated with the forming of the part of the metal pipe material 5. In this case, a worker can check the past actual results of energy consumption.

The display device 105 may display energy consumption during the forming of the part of the metal pipe material 5 at a predetermined time interval. In this case, a worker can check energy consumption associated with the forming of the metal pipe material 5 for each part through the check of energy consumption at a predetermined time interval.

The display device 105 may display cumulative energy consumption associated with the forming of the part of the metal pipe material 5 at a predetermined time interval. In this case, a worker can check the past actual results of energy consumption associated with the forming of the metal pipe material 5 for each part through the check of cumulative energy consumption at a predetermined time interval.

The forming system 100 is a forming system including the display device 105 described above.

The forming system 100 has the same actions and effects as the display device 105.

The present invention is not limited to the embodiment described above.

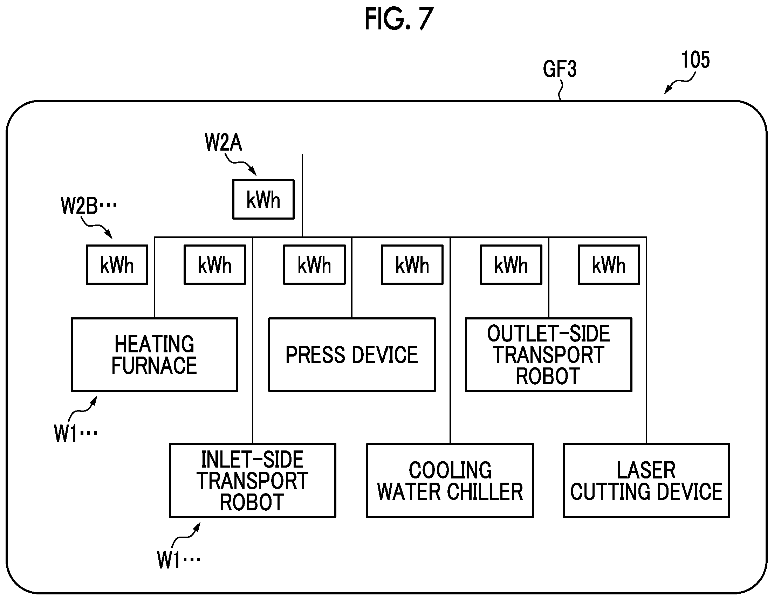

The display device 105 for the forming system 100 including the forming apparatus 10 shown in Fig. 2 has been exemplified in the above-described embodiment. Alternatively, the display device 105 may display a forming system 100 including a forming apparatus that performs heating and does not supply fluid, for example, a forming apparatus for hot stamping. The forming apparatus for hot stamping performs furnace heating instead of electric heating, and also does not perform expansion forming using fluid. Therefore, the metal material may not be a metal pipe material, and may be a metal plate material or the like. In this case, the display device 105 may display an image GF3 shown in Fig. 7. As shown in Fig. 7, on the windows W1, device names, such as "heating furnace", "inlet-side transport robot", "outlet-side transport robot", and "laser cutting device", are displayed and device names, such as "press device" and "cooling water chiller" of the forming apparatus 10, are shown. The power consumption of the heating furnace is displayed in Fig. 7, but the amount of CO₂ emission consumed in the heating furnace may be displayed. In this case, the power consumption of the press device and the transport robots can be converted into the amount of CO₂ emission, and the converted amount of CO₂ emission can be displayed.

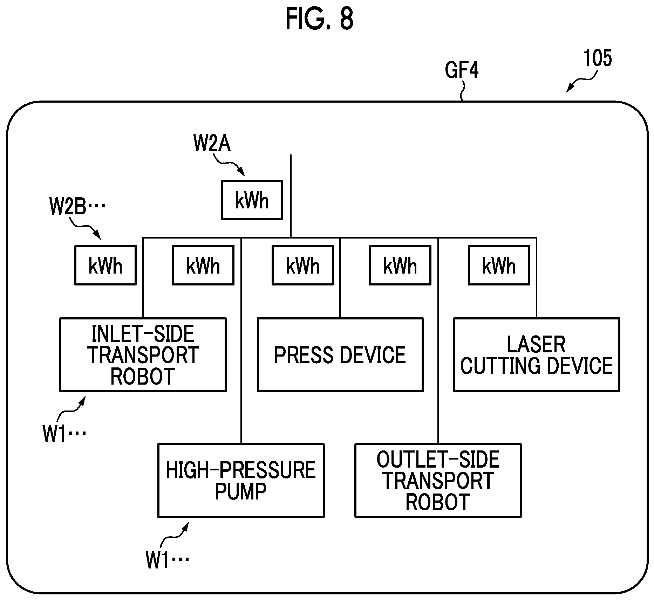

The display device 105 may display a forming system 100 including a forming apparatus that supplies fluid and does not perform heating, for example, a forming apparatus for hydroforming. The forming apparatus for hydroforming does not perform heating. In this case, the display device 105 may display an image GF4 shown in Fig. 8. As shown in Fig. 8, on the windows W1, device names, such as "inlet-side transport robot", "outlet-side transport robot", and "laser cutting device", are displayed and device names, such as "press device" and "high-pressure pump" of the forming apparatus 10, are shown.

Further, manufacturing numbers or QR codes (registered trademark) may be stamped on metal materials, and energy consumption associated with the forming of the metal material for each part (single metal material) may be displayed on the display device. Furthermore, processes required to produce a metal material (a melting process of melting iron, a pipe forming process of forming a metal plate into a pipe shape, and a pre-forming process of pre-forming a pipe (including bending and the like)) may be added and displayed on the display device.

In addition, the consumption of energy consumed in material processing processes (a cutting process and a trimming process) after the forming of the metal material may be displayed on the display device.

The unit of energy consumption may be displayed in power or may be displayed in the amount of CO₂ emission. Further, both the amount of CO₂ emission and power can be displayed as the unit of energy consumption, or the unit of energy consumption may be switched to either one of the amount of CO₂ emission and power.

In this way, energy consumption per product, which is required for the forming of the metal material, can be immediately identified from the production number, the QR code, or the like which is useful to identify energy consumption or to improve the equipment.

An apparatus that performs heating, expansion, pressing, cooling, or the like without moving a metal pipe material in the die, has been described as the forming apparatus according to the present embodiment, but the present application can also be applied to other forming apparatuses. For example, it goes without saying that the present application can also be applied to a forming apparatus that forms a metal pipe material while moving the metal pipe material to a heating station, an expanding station, a pressing station, a cooling station, or the like in the forming apparatus. That is, the specific configuration of a forming apparatus to which the present application is applied is not particularly limited to a range not departing from the scope of the present application, and the present application can also be widely applied to a forming apparatus of which each component is changed.

### Reference Signs List

- 5: Metal pipe material (metal material)
- 100: Forming system
- 105: Display device

## Claims

1. A display device of a forming system that performs at least one of heating and expansion of a metal material and moves a die to form the metal material, the display device displaying at least energy consumption associated with forming of the metal material for each part.

2. The display device according to claim 1,
wherein the forming system includes a plurality of devices that consume energy, and
the display device displays the energy consumption of each device in a state where the plurality of devices are classified.

3. The display device according to claim 2,
wherein the plurality of devices include at least an electric heating device, a high-pressure gas generation device, a bending device, and a cutting device.

4. The display device according to claim 1,
wherein the forming system includes a plurality of devices that consume energy,
the devices include components of the devices, and
the display device adjusts and displays hierarchical levels of the components of the devices.

5. The display device according to claim 1,
wherein the forming system includes a plurality of devices that consume energy, and
the display device displays cumulative energy consumption of each device.

6. The display device according to claim 1,
wherein the energy consumption associated with the forming of each part of the metal material is displayed.

7. The display device according to claim 1,
wherein cumulative energy consumption associated with the forming of the part of the metal material is displayed.

8. The display device according to claim 1,
wherein energy consumption during the forming of the part of the metal material is displayed at a predetermined time interval.

9. The display device according to claim 1,
wherein cumulative energy consumption associated with the forming of the part of the metal material is displayed at a predetermined time interval.

10. A forming system comprising:
the display device according to any one of claims 1 to 9.
